# FASCICULE DE BREVET EUROPEEN

(11) **EP 2 782 695 B1**
(45) Date de publication et mention de la délivrance du brevet: **06.04.2016**
(21) Numéro de dépôt: 12788190.2
(22) Date de dépôt: 15.11.2012
(51) Int. Cl.: B23D 51/12

(54) **MONTURE DE SCIE À ARCHET AMÉLIORÉE ET SCIE À ARCHET CORRESPONDANTE**
VERBESSERTE BOGENSÄGERAHMEN UND ENTSPRECHENDE BOGENSÄGE
IMPROVED BOW SAW FRAME AND CORRESPONDING BOW SAW

(30) Priorité: 24.11.2011 FR 1103582
(43) Date de publication de la demande: 01.10.2014
(73) Titulaire: Stanley Works (Europe) GmbH, 8600 Dübendorf (CH)
(72) Inventeur: POILLOT, Anthony, 25000 Besancon (FR); PRAUDEL, Philippe, 91160 Longjumeau (FR); VECCHIO, Jocelyn, 94400 Vitry sur Seine (FR)
(74) Mandataire: Kavanagh, Benjamin
(86) Numéro de dépôt international: PCT/EP2012/072774
(87) Numéro de publication internationale: WO 2013/076010

(56) Documents cités:
- WO-A2-01/10589
- GB-A- 2 372 722
- US-A- 3 822 731
- US-A- 4 367 779
- US-A- 5 044 083
- US-A- 5 826 344

## Description

La présente invention est relative à une monture de scie à archet, du type comprenant un archet solidaire d'une poignée arrière ; un organe avant d'accrochage relié à l'archet et destiné à accrocher l'extrémité distale d'une lame de scie, l'organe avant étant prévu à l'extrémité avant de la monture ; un organe arrière d'accrochage relié à la poignée et destiné à accrocher l'extrémité proximale de la lame de scie, l'organe arrière étant prévu à l'extrémité arrière de la monture ; un mécanisme de mise en tension d'une lame de scie lorsque celle- ci est accrochée aux organes d'accrochage avant et arrière, le mécanisme comportant un organe de commande rotatif accouplé à un système vis-écrou.

Le document FR-A-2 702 167 montre un exemple de monture de scie de ce type.

Toutefois, ce type de monture ne peut exclure un risque de surcharge de tension de la lame pouvant entraîner la destruction partielle de la monture. Le document US 3 822 731 A décrit une monture de scie à archet telle que décrite dans le préambule de la revendication 1.

L'invention a pour but de fournir des moyens économiques et fiables permettant d'exercer facilement une tension précise sur la lame sans risque de dommage à la monture.

A cet effet, l'invention a pour objet une monture de scie du type précité, dans laquelle le mécanisme de mise en tension comporte un dispositif rotatif débrayable, positionné entre l'organe de commande et le système vis-écrou. La monture de scie suivant l'invention, telle que revendiquée dans la revendication 1, peut comporter une ou plusieurs des caractéristiques suivantes :
- le dispositif limiteur de couple est intégré à l'organe de commande pour former un sous-ensemble ;
- le dispositif limiteur de couple désaccouple l'organe de commande du système-écrou, lui-même relié à l'organe d'accrochage arrière, lorsque l'organe de commande est actionné dans le sens de rotation correspondant à la mise en tension de la lame et qu'une valeur de seuil de couple est atteinte ;
- le dispositif limiteur de couple agit de telle manière que l'organe de commande reste accouplé au système vis-écrou lorsque l'organe de commande est actionné dans le sens de rotation correspondant au relâchement de tension de la lame ;
- le dispositif limiteur de couple comporte deux couronnes dentées à dentures complémentaires à engagement mutuel axial et un organe de sollicitation agissant pour engager mutuellement lesdites couronnes dentées ;
- les dentures sont asymétriques, chaque dent comprenant une première face latérale inclinée et une deuxième face latérale droite délimitant une troisième face transversale sensiblement droite ;
- l'organe de commande est une manivelle en plastique moulé comportant un logement recevant au moins partiellement le dispositif limiteur de couple lui-même recouvert par une coiffe en plastique moulé soudée à la manivelle ;
- la poignée comprend un évidement inférieur dans lequel est logé, par conjugaison de forme, l'organe de commande ;
- l'archet et la poignée arrière sont venus de matière d'un seul bloc, notamment en aluminium moulé.

L'invention a également pour objet une scie à archet comprenant une monture de scie telle que définie plus haut, et au moins une lame de scie adaptée pour être accrochée auxdits organes avant et arrière d'accrochage.
Un exemple de réalisation de l'invention va maintenant être décrit en regard des dessins annexés, sur lesquels :
- la Figure 1 est une vue en élévation d'une scie à archet suivant l'invention ;
- la Figure 2 est une vue en perspective éclatée de la scie de la Figure 1 ;
- la Figure 3A est une vue en perspective des moyens de réglage de la tension de la lame de la scie ;
- la Figure 3B est une vue en perspective éclatée des moyens de réglage de la Figure 3A;
- la Figure 3C est une vue schématique en élévation à échelle agrandie du profil de denture présent dans les moyens de réglage de la Figure 3A ;
- la Figure 4 est une vue du détail IV de la Figure 1 à échelle agrandie de la partie arrière de la scie avec arrachement partiel ;
- les Figures 5A et 5B sont des vues illustrant le fonctionnement des moyens de réglage de la tension de la lame de la scie de la Figure 3A.

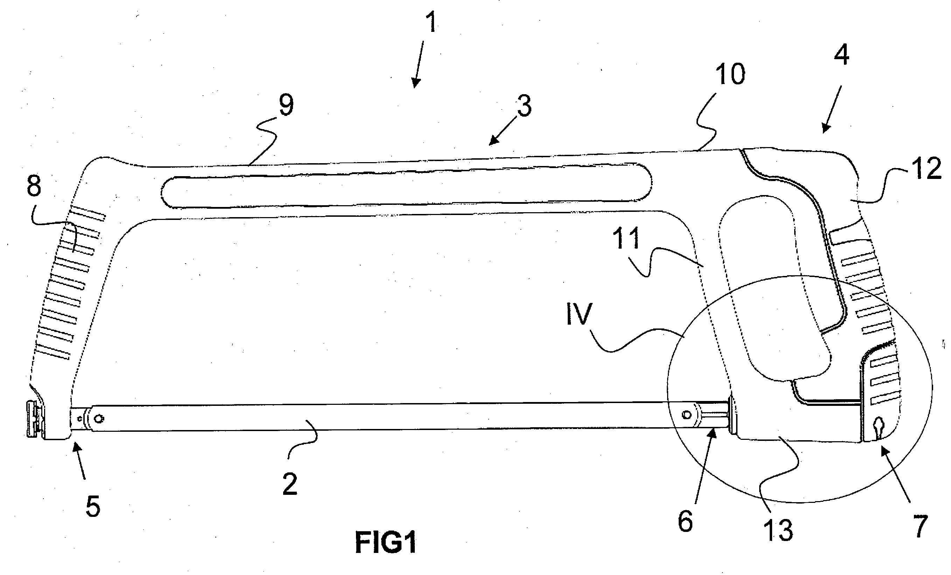

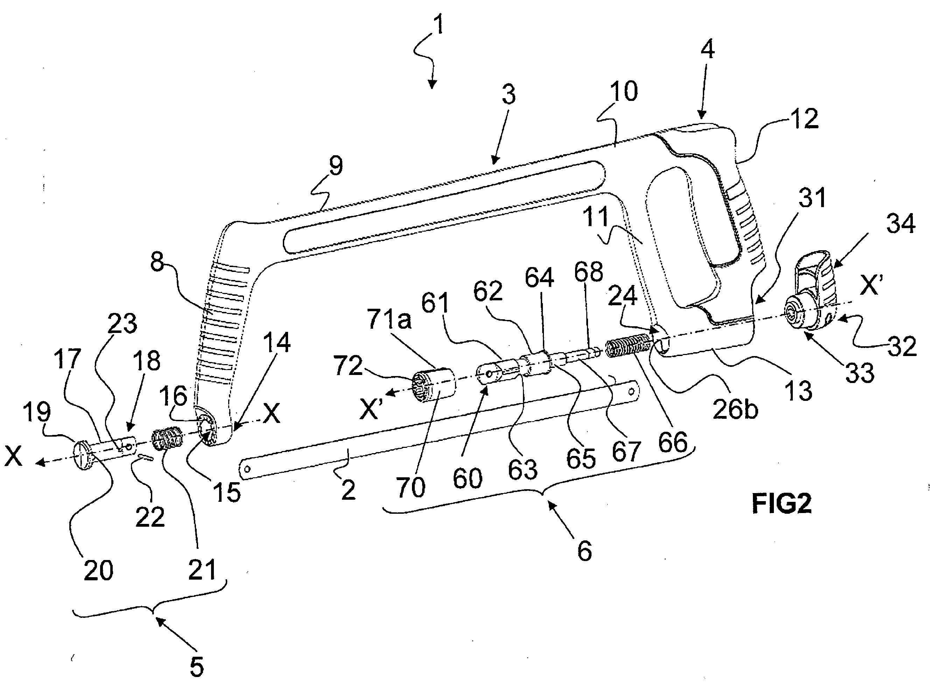

La scie à archet représentée aux dessins des figures 1 et 2 comprend une monture 1 qui porte une lame de scie 2. La monture 1 comprend un archet 3 solidaire d'une poignée arrière 4. Elle comprend également un organe d'accrochage avant 5 et un organe d'accrochage arrière 6. La lame est accrochée aux organes 5 et 6 et tendue au moyen d'un mécanisme de tension 7 incorporé dans la poignée.

On supposera la monture orientée comme représenté, avec la lame en bas. L'archet 3 est monobloc. Il a une forme générale en L, avec une branche avant 8 faiblement inclinée vers l'avant et vers le bas, d'environ 18°, et une branche supérieure 9 sensiblement horizontale dont l'extrémité arrière est venue de matière avec la partie supérieure 10 de la poignée, dans le prolongement de celle-ci. La partie supérieure 10 de la poignée est sensiblement horizontale.

La poignée 4 comprend une poutre avant 11 et une partie arrière 12 aisément préhensible par un opérateur, la poutre avant et la partie arrière de préhension étant sensiblement parallèles et présentant la même inclinaison vers l'arrière et vers le bas, d'environ 14°. La poutre avant 11 est reliée d'un seul tenant à la partie supérieure 10 de la poignée. La poignée comprend également une partie inférieure 13 sensiblement horizontale qui relie les extrémités inférieures de la poutre avant 11 et de la partie de préhension arrière 12. La partie inférieure 13 contient le mécanisme de tension 7.

L'extrémité inférieure 14 de la branche avant 8 comprend un alésage étagé 15 s'étendant suivant un axe longitudinal X-X orienté d'arrière en avant. L'alésage 15 comprend un premier tronçon de guidage de section transversale circulaire (non représenté) débouchant du côté de la lame 2 et un deuxième tronçon également de section transversale circulaire (également non représenté) de diamètre supérieur à celui du tronçon de guidage. Le deuxième tronçon débouche, à l'opposé de la lame 2, sur une face comportant une pluralité d'évidements 16 régulièrement disposés angulairement.

L'organe d'accrochage avant 5 comprend un fût intermédiaire 17 de section transversale circulaire délimité par une partie d'accrochage 18 de la lame 2 et une tête 19, l'ensemble étant venu d'un seul tenant en métal. En alternative (mode de réalisation non représenté), il peut être envisagé un organe d'accrochage avant comprenant un fût en acier et une tête en matière plastique, distincts et assemblés par une goupille métallique. La tête 19 comporte plusieurs bossages d'indexage 20, en particulier quatre bossages régulièrement disposés angulairement, aptes à coopérer avec certains de la pluralité d'évidements 16 afin d'orienter angulairement l'organe d'accrochage avant 5 par rapport à la monture 1. Le diamètre du premier tronçon de guidage correspond, au jeu près, à celui du fût intermédiaire et permet de guider celui-ci à coulissement.

Le deuxième tronçon de l'alésage 15 reçoit un ressort de compression hélicoïdal 21 dont l'une des extrémités appuie contre l'épaulement de l'alésage 15 et dont l'autre des extrémités appuie contre la tête 19. Le ressort 21 est adapté pour entourer le fût intermédiaire 17.

L'organe d'accrochage avant 5, chargé par le ressort 21, est monté à coulissement dans l'alésage 15. Une goupille 22 est insérée à force dans un perçage 23 traversant positionné transversalement par rapport au fût intermédiaire 17 du côté de la lame. La goupille 22 limite la course de coulisse de l'organe d'accrochage avant 5. Ce dernier agit sur l'extrémité distale de la lame 2 de manière à la déplacer vers la branche avant 8.

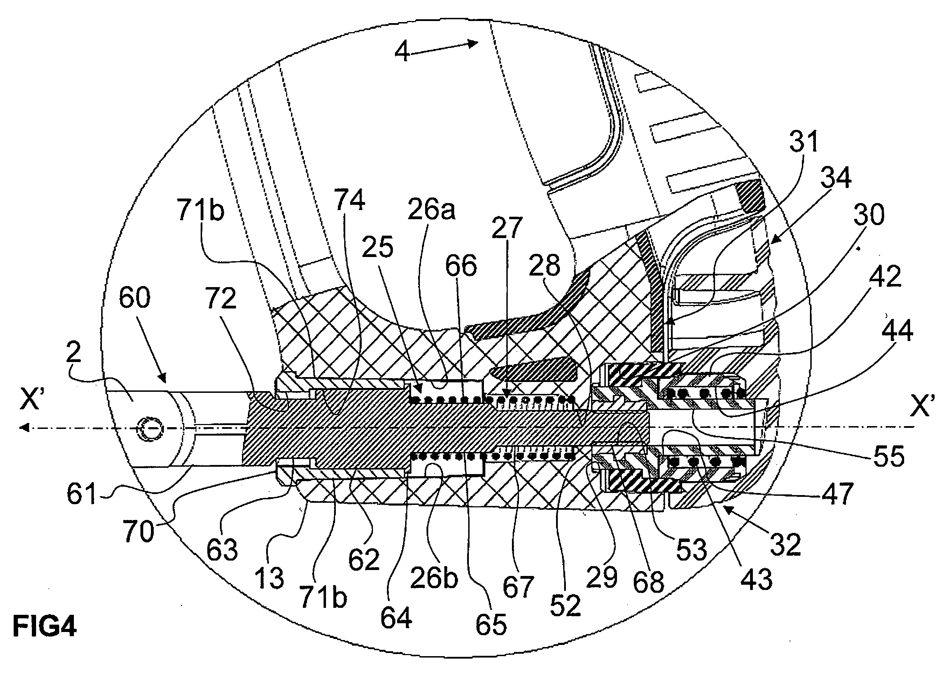

La partie inférieure 13 de la poignée 4 comprend un alésage étagé 24 s'étendant suivant un axe longitudinal X'-X' orienté d'arrière en avant. Les axes X-X et X'-X' sont sensiblement alignés. Sur la figure 4, du côté de la lame 2, l'alésage 24 comprend un premier tronçon 25, légèrement conique d'avant en arrière et de section transversale circulaire. Le tronçon 25 comporte deux nervures longitudinales 26a et 26b (seule la rainure 26b est représentée à la figure2) disposées en saillie radiale intérieure et diamétralement opposées. Celles-ci convergent suivant l'axe X'-X' vers un point disposé à l'opposé de la lame 2 par rapport à la partie inférieure 13.

Le premier tronçon 25 s'étend sur environ les deux tiers de la longueur de l'alésage 24. Le tronçon 25 est prolongé axialement d'un deuxième tronçon 27 de section transversale circulaire dont le diamètre est inférieur à celui du premier tronçon 25. Le deuxième tronçon 27 s'étend sur environ un tiers de la longueur de l'alésage 24.

Un troisième tronçon 28 de section circulaire et de diamètre inférieur à celui du deuxième tronçon 27 prolonge axialement ce dernier à l'opposé de la lame 2. Le tronçon 28 s'étend sur une faible longueur.

Sur la figure 4, du côté de la partie inférieure 13 opposé à la lame 2, le troisième tronçon 28 de l'alésage 24 débouche dans un premier lamage 29 de section circulaire dont le diamètre est inférieur à celui du tronçon 25 et supérieur à celui du tronçon 27, lui-même prolongé d'un deuxième alésage 30 de section circulaire et dont le diamètre est supérieur à celui du tronçon 25.

Le deuxième lamage 30 débouche dans un évidement 31 pratiqué dans la partie inférieure de la branche de préhension 12 de la poignée 4. L'évidement 31 comprend un méplat contenu dans un plan perpendiculaire à l'axe X'-X'. Ce méplat se prolonge vers le haut par un arrondi concave en surplomb.

Les premier et deuxième lamages 29 et 30 s'étendent suivant l'axe X'-X' et forment un logement dans lequel est reçu la partie avant 33 d'un dispositif de limitation de couple 32 (figure2), ladite partie avant s'étendant suivant l'axe X'-X' en saillie d'un organe de commande ou manivelle 34, par exemple moulée en matière plastique.

Le dispositif limiteur de couple 32 est intégré à la manivelle 34 pour former un sous-ensemble dont le fonctionnement sera décrit ultérieurement.

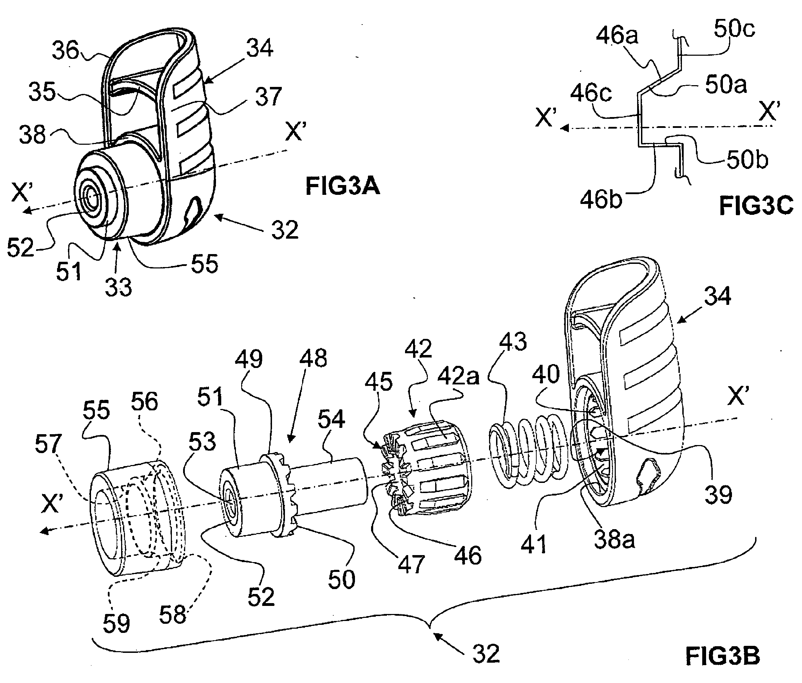

Sur les figures 3A et 3B, la manivelle 34 a la forme d'une coquille ouverte à l'avant, à paroi de faible épaisseur. Cette coquille est de forme conjuguée à celle de l'évidement 31 de la partie inférieure de la poignée 4 de manière à compléter cette poignée lorsque la manivelle 34 est en place dans cet évidement.

La manivelle 34 comporte une nervure supérieure 35 en arc de cercle, s'étendant d'un bord à l'autre des côtés latéraux 36 et 37 de la coquille et se terminent en léger retrait par rapport au plan de ces bords.

La partie inférieure de la coquille formant la manivelle 34 comporte une nervure inférieure 38, en arc de cercle, s'étendant d'un bord à l'autre des côtés latéraux 36 et 37 de la coquille et se terminant dans le plan de ces bords.

La nervure inférieure 38 et une gorge 38a (figure3B) délimitent un logement borgne 39, cylindrique, s'étendant suivant l'axe X'-X'. Il comporte, sur sa périphérie intérieure, une pluralité de nervures 40 et rainures 41 disposées en alternance en saillie radiale et s'étendant suivant l'axe X'-X'. Le logement 39 est adapté pour recevoir une douille entraînante 42 à profil extérieur crénelé 42a de forme conjuguée à celle du profil du logement 39. Un organe de sollicitation 43, en particulier un ressort de compression hélicoïdal, dont l'une des extrémités est en appui au fond du logement 39, charge la douille 42 axialement.

Sur la figure 4, la douille 42 comprend un lamage 44 débouchant du côté du logement 39 de la manivelle 34, dans le fond duquel l'autre extrémité du ressort 43 est en appui. La douille est monté mobile à coulisse suivant l'axe X'-X' par rapport au logement 39. Le ressort 43 tend à maintenir la douille 42 en légère saillie par rapport au logement 39.

La face avant 45 de la douille 42 comporte une couronne dentée 46 dont les dents s'étendent radialement perpendiculairement à l'axe X'-X' et dont le profil transversal est asymétrique. Deux dents adjacentes sont séparées par un évidement de forme complémentaire.

Sur la figure 3C, chaque dent de la couronne 46 comprend une première face latérale 46a inclinée par rapport à l'axe X'-X' et une deuxième face latérale droite 46b sensiblement parallèle à l'axe X'-X' délimitant une troisième face transversale droite 46c sensiblement perpendiculaire à l'axe X'-X'.

La face avant 45 comporte également un perçage 47 (figure 3B) débouchant dans le lamage 44.

Le dispositif limiteur de couple 32 comprend également un arbre entraîné 48 creux comportant une collerette 49 intermédiaire pourvue d'une couronne dentée 50 de forme conjuguée à celle de la douille entraînante 42.

Les couronnes 46 et 50 sont à dentures complémentaires à engagement mutuel axial. Sur la figure 3C, chaque dent de la couronne 50 comprend une première face latérale 50a inclinée par rapport à l'axe X'-X' et une deuxième face latérale droite 50b sensiblement parallèle à l'axe X'-X' délimitant une troisième face transversale droite 50c sensiblement perpendiculaire à l'axe X'-X'. Le ressort de compression 43 agit de manière à engager mutuellement les couronnes dentées 46 et 50.

La collerette 49 est délimité à l'avant par un fût cylindrique 51 recevant un insert 52 à alésage taraudé 53 (figures 3B et 4) et, à l'arrière, par un fourreau 54 qui présente un perçage axial traversant 55 (figure 4) débouchant dans l'alésage taraudé 53 de l'insert 52. Ce dernier correspond à la partie femelle d'un système vis-écrou.

La collerette 49, le fût 51 et le fourreau 54 sont venus de matière, par exemple en matière plastique, l'insert 52 étant, quant à lui, métallique.

Le dispositif limiteur de couple 32 est recouvert d'une coiffe 55 (figure 3B), par exemple en matière plastique, comportant un alésage muni de deux diamètres différents (figure4). Le tronçon arrière 56 de grand diamètre recouvre les couronnes dentées 46 et 50. Le tronçon avant 57 de plus petit diamètre reçoit le fût 51 de l'arbre 48. L'extrémité libre arrière 58 de la coiffe engage la gorge 38a de la manivelle 34 à laquelle la coiffe est reliée solidairement.

De préférence, lès matières plastiques de la manivelle 34 et de la coiffe 55 sont compatibles pour permettre un soudage des deux pièces. Cet assemblage entraîne un coût très économique du sous-ensemble.

Dans cette configuration de sous-ensemble, la partie avant du fût 51 du dispositif limiteur de couple 32 est en légère saillie axiale par rapport à la coiffe 55 (figure3B).

Sous l'action du ressort 43, les couronnes dentées 46 et 50 sont engagées mutuellement, la collerette 49 de l'arbre 48 étant en appui contre l'épaulement interne 59 (figure 3B) de la coiffe 55.

La douille entraînante 42 est solidaire de la manivelle 34 en rotation par rapport à l'axe X'-X' et mobile en coulisse suivant le même axe par rapport à ladite manivelle à l'encontre de l'action du ressort 43.

Sur les figures 2 et 4, l'organe d'accrochage arrière 6 s'étend suivant l'axe X'-X' et comprend d'avant en arrière une partie d'accrochage 60 de la lame 2 prolongée d'un coulisseau 61 de section transversale carrée, lui-même raccordé à un tronçon de guidage 62 cylindrique de section circulaire par l'intermédiaire d'un tronçon de raccordement 63, une collerette 64 s'étendant radialement à la périphérie du tronçon de guidage 62. La collerette est reliée à un tronçon de support 65 cylindrique à section circulaire de diamètre inférieur à celui de la collerette et apte à supporter sur sa périphérie extérieure, au jeu près, l'intérieur des spires d'un ressort de compression 66 hélicoïdal dont l'une des extrémités appuie contre la collerette. L'organe d'accrochage 6 comprend également une tige arrière 67 venue de matière avec le tronçon 65 et dont l'extrémité libre 68 filetée est adaptée pour coopérer avec l'alésage taraudé 53 de l'insert 52 de la douille 42. Les diamètres de tige arrière 67 et de l'extrémité filetée 68 sont légèrement inférieurs à celui du tronçon 28 de l'alésage 24 de manière à le traverser. La tige filetée 68 correspond à la partie mâle d'un système vis-écrou. L'organe d'accrochage arrière 6 est réalisé, de préférence, d'un seul tenant en métal, par exemple en acier.

Pour assembler l'organe d'accrochage 6 dans la poignée 4, l'opérateur enfile le ressort 66 sur de la tige 67 et le positionne de manière à ce qu'il entoure le tronçon de support 65 au jeu près. L'organe 6 est ensuite monté dans l'alésage 24 de la partie inférieure 13 de la poignée de façon à ce que la tige filetée 68 traverse le tronçon 28 et débouche dans les lamages 29 et 30.

Le ressort 66 appuie, d'une part, contre l'épaulement droit séparant la collerette 64 et le tronçon 65 et, d'autre part, contre l'épaulement droit séparant les tronçons 27 et 28 de l'alésage 24.

Un fourreau de maintien 70 (figures 2 et 4) conique de section transversale circulaire comporte deux rainures 71a et 71b diamétralement opposées aptes à coopérer respectivement avec les nervures 26a et 26b du tronçon 25. Il comporte également un orifice avant 72 de section non circulaire, ici octogonale, apte à coopérer avec le coulisseau 61 pour indexer angulairement la lame 2 par rapport à la monture 1. Un alésage de guidage 74 (figure 4) cylindrique de section circulaire prolonge l'orifice 72 vers l'arrière. L'alésage 74 est adapté pour que le tronçon 62 soit mobile en rotation par rapport à l'axe X'-X' et en coulisse suivant ledit axe à l'intérieur du fourreau 70.

Une fois les rainures 71a et 71b engagées respectivement dans les nervures 26a et 26b, l'opérateur monte à force le fourreau 70 dans l'alésage 24 de manière à ce qu'il soit solidaire de la poignée 4.

A cette étape d'assemblage, l'organe d'accrochage arrière 6 est configuré comme représenté à la figure 4, c'est-à-dire de manière que le ressort 66 pousse la collerette 64 en butée contre le fourreau 70, que le coulisseau 61 n'est pas en prise avec l'orifice octogonal 72 et que l'extrémité filetée 68 de la tige 67 débouche dans le lamage 30.

L'opérateur présente le sous-ensemble constitué du dispositif limiteur de couple 32 équipé de la coiffe 55 reliée à la manivelle 34 en regard de la tige filetée, et engage ce sous-ensemble sur la tige en actionnant la manivelle dans un mouvement de rotation par rapport à l'axe X'-X' correspondant à un sens de vissage du sous-ensemble sur l'extrémité filetée 68 de la tige. Le coulisseau 61 se déplace axialement tout en tournant simultanément avec la manivelle 34, jusqu'à ce qu'il bute contre l'orifice octogonal 72 du fourreau.

L'opérateur sélectionne l'orientation du coulisseau 61 par rapport à la monture 1 en l'engageant dans l'orifice octogonal 72 par une légère poussée axiale à l'encontre de l'action du ressort 66. Tout en maintenant la poussée, il reprend ensuite le vissage du sous-ensemble de limitation de couple 32 à manivelle 34 sur la tige filetée 68 jusqu'à ce que la partie avant 33 du sous-ensemble limiteur de couple à manivelle soit en butée contre le fond du lamage 29 (figure 4).

Une fois le coulisseau 61 engagé dans l'orifice octogonal 72, l'opérateur fixe la lame de scie 2 sur les organes d'accrochage 5 et 6 qui sont orientés angulairement par rapport à la monture 1 selon le choix de l'opérateur. Il est à noter que le montage de la lame est toutefois possible avant la sélection de l'angle. L'utilisateur reprend ensuite le mouvement de rotation de la manivelle 34 dans le sens du vissage, ce qui entraîne la mise en tension rapide de la lame 2.

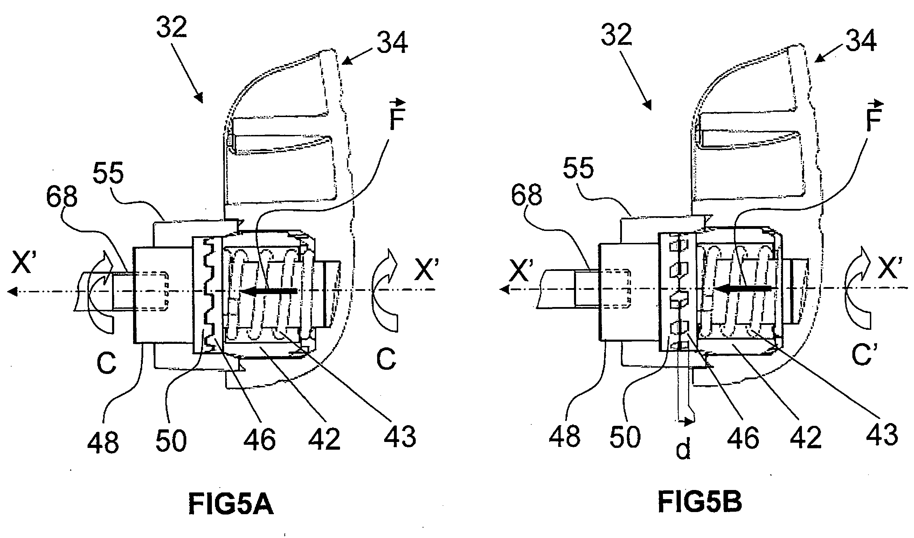

Comme représenté sur la figure 5A, lorsque l'effort de rotation appliqué par l'opérateur sur la manivelle 34 engendre un couple de rotation C au niveau de l'engagement des faces inclinées des couronnes dentées 46 et 50, et qu'il en résulte une composante axiale inférieure à l'effort axial de réaction du ressort de compression 43 représenté par la flèche F, les dites couronnes dentées restent engagées mutuellement. La douille entraînante 42 est maintenue axialement en position avant et le couple de rotation C est transmis à l'arbre entraîné 48. La tige filetée 68 étant accouplée à l'insert taraudé 52 de l'arbre 48, le couple de rotation C est converti en un mouvement de coulisse de l'avant vers l'arrière de la tige filetée 68 par rapport à l'axe X'-X'. La mise en tension de la lame 2 est effective.

Comme représenté sur la figure 5B, lorsque l'effort de rotation appliqué par l'opérateur sur la manivelle 34 engendre un couple de rotation C' au niveau de l'engagement des faces inclinées des couronnes dentées 46 et 50, et qu'il en résulte une composante axiale supérieure ou égale à l'effort axial de réaction du ressort de compression 43 représenté par la flèche F, les faces inclinées 46a et 50a des couronnes dentées 46 et 50 glissent les unes par rapport aux autres, ce qui entraîne un mouvement d de coulisse de l'avant vers l'arrière de la douille entraînante 42 à l'encontre de l'action du ressort 43. La douille 42 est désengagée de l'arbre 48, et se trouve momentanément en position axiale arrière. Le couple de rotation C' n'est pas transmis à l'arbre entraîné 48, ce qui immobilise la tige filetée 68. La mise en tension de la lame 2 est arrêtée.

Le dispositif de limitation du couple 32 est un dispositif rotatif débrayable positionné entre l'organe de commande 34 et le système vis-écrou comportant l'insert taraudé 52 et la tige filetée 68.

Les couronnes 46 et 50 sont maintenues désengagées tant que les faces transversales droites 46c et 50c des dentures sont en contact sous la charge du ressort de compression 43.

Un mouvement supplémentaire de rotation de la manivelle 34 par rapport à l'axe X'-X' dans le sens du vissage permet aux couronnes dentées 46 et 50 d'être réengagées à nouveau mutuellement.

L'opérateur agit par répétition jusqu'à ce que la manivelle 34 soit sensiblement positionnée dans l'évidement 31 de la poignée 4, et cela sans avoir augmenté l'effort de traction sur la lame.

Grâce au dispositif de limitation de couple 32, le mécanisme de mise en tension 7 d'une lame 2 de scie permet d'exercer un effort de traction prédéterminé sur la lame proportionnel à l'effort de réaction du ressort taré 43.

En fonctionnement, le dispositif de limitation de couple 32 évite un effort de traction trop important sur les organes d'accrochage 5 et 6 pouvant mener à la déformation ou à la destruction de la monture 1 ou du mécanisme de mise en tension 7.

Lorsque l'opérateur souhaite détendre la lame 2, par exemple pour la remplacer, il agit sur la manivelle 34 dans le sens correspondant au dévissage du dispositif limiteur de couple 32 par rapport à la tige filetée 68.

Les couronnes dentées 46 et 50 agissent entre elles par l'intermédiaire des faces latérales droites 46b et 50b qui restent en prise mutuelle quel que soit la valeur de couple de rotation appliqué à la douille entraînante 42 en rotation par rapport à l'axe X'-X'.

Le relâchement de la tension de la lame 2 est obtenu après plusieurs mouvements rotatifs de la manivelle 34, permettant le retrait de la lame des organes d'accrochage 5 et 6.

Ainsi, le dispositif limiteur de couple 32 agit en désaccouplant l'organe de commande 34 du système-écrou constitué de l'insert 52 et de l'extrémité filetée 68 de la tige 67 lorsque l'organe de commande est actionné dans le sens de rotation correspondant à la mise en tension de la lame et qu'une valeur de seuil de couple est atteinte et appliqué au dispositif limiteur de couple 32.

Lorsque l'organe de commande est actionné dans le sens de rotation correspondant au relâchement de la tension de la lame, le même dispositif 32 agit de telle manière que l'organe de commande 34 reste accouplé au système vis-écrou quel que soit la valeur de couple appliqué audit dispositif.

De préférence, l'archet 3 et la poignée arrière 4 sont venus de matière d'un seul bloc, notamment en aluminium moulé.

Grâce à l'invention, une monture de scie est équipé de moyens économiques et fiables permettant d'exercer facilement une tension précise sur la lame sans risque de dommage à la monture

L'invention s'applique également aux montures de scies ayant un archet courbe.

## Revendications

1. Monture de scie à archet, du type comprenant un archet (3) solidaire d'une poignée arrière (4); un organe avant d'accrochage (5) relié à l'archet et destiné à accrocher l'extrémité distale d'une lame de scie (2), l'organe avant étant prévu à l'extrémité avant de la monture ; un organe arrière d'accrochage (6) relié à la poignée et destiné à accrocher l'extrémité proximale de la lame de scie, l'organe arrière étant prévu à l'extrémité arrière de la monture ; un mécanisme (7) de mise en tension d'une lame de scie lorsque celle- ci est accrochée aux organes d'accrochage avant (5) et arrière (6), le mécanisme (7) comportant un organe de commande (34) rotatif accouplé à un système vis-écrou (52, 68), **caractérisée en ce que** le mécanisme (7) de mise en tension comporte un dispositif (32) rotatif débrayable, positionné entre l'organe de commande (34) et le système vis-écrou (52, 68), ledit dispositif limitant le couple transmis depuis l'organe de commande (34) vers le système vis-écrou (52, 68) et **en ce que** le dispositif limiteur de couple (32) agit en désaccouplant l'organe de commande (34) du système-écrou (52, 68), lui-même relié à l'organe d'accrochage arrière (6), lorsque l'organe de commande (34) est actionné dans le sens de rotation correspondant à la mise en tension de la lame (2) et qu'une valeur de seuil de couple est atteinte.

2. Monture selon la revendication 1, **caractérisée en ce que** le dispositif limiteur de couple (32) est intégré à l'organe de commande (34) pour former un sous-ensemble.

3. Monture selon l'une quelconque des revendications 1 à 2, **caractérisée en ce que** le dispositif limiteur de couple (32) agit de telle manière que l'organe de commande (34) reste accouplé au système vis-écrou (52, 68) lorsque l'organe de commande (34) est actionné dans le sens de rotation correspondant au relâchement de tension de la lame (2).

4. Monture selon l'une quelconque des revendications 1 à 3, **caractérisée en ce que** le dispositif limiteur de couple (32) comporte deux couronnes dentées (46, 50) à dentures complémentaires à engagement mutuel axial et un organe de sollicitation (43) agissant pour engager mutuellement lesdites couronnes dentées.

5. Monture selon la revendication 4, **caractérisée en ce que** les dentures sont asymétriques, chaque dent comprenant une première face latérale inclinée (46a, 50a) et une deuxième face latérale droite (46b, 50b) délimitant une troisième face transversale (46c, 50c) sensiblement droite.

6. Monture selon l'une quelconque des revendications 1 à 5, **caractérisée en ce que** l'organe de commande (34) est une manivelle en plastique moulé comportant un logement (39) recevant au moins partiellement le dispositif limiteur de couple (32) lui-même recouvert par une coiffe (55) en plastique moulé soudée à ta manivelle.

7. Monture de scie selon l'une quelconque des revendications 1 à 6, **caractérisée en ce que** la poignée (4) comprend un évidement inférieur (31) dans lequel est logé, par conjugaison de forme, l'organe de commande (34).

8. Monture de scie selon l'une quelconque des revendications 1 à 7, **caractérisée en ce que** l'archet (3) et la poignée arrière (4) sont venus de matière d'un seul bloc, notamment en aluminium moulé.

9. Scie à archet, **caractérisée en ce qu'**elle comprend une monture de scie (1) suivant l'une quelconque des revendications 1 à 8, et au moins une lame de scie (2) adaptée pour être accrochée auxdits organes avant (5) et arrière (6) d'accrochage.

## Patentansprüche

1. Rahmen für eine Bügelsäge von der Art, umfassend einen Bügel (3), der mit einem hinteren Griff (4) fest verbunden ist; ein vorderes Element zum Verhaken (5), das mit dem Bügel verbunden ist und dazu bestimmt ist, das distale Ende eines Sägeblatts (2) zu verhaken, wobei das vordere Element an dem vorderen Ende des Rahmens vorgesehen ist; ein hinteres Element zum Verhaken (6), das mit dem Griff verbunden ist und dazu vorgesehen ist, das proximale Ende des Sägeblatts zu verhaken, wobei das hintere Element an dem hinteren Ende des Rahmens vorgesehen ist; einen Spannmechanismus (7) eines Sägeblattes, wenn dieses in dem vorderen (5) und hinteren Element zum Verhaken (6) verhakt ist, wobei der Mechanismus (7) ein drehbares Steuerorgan (34) aufweist, das mit einem Schrauben-/Muttersystem (52, 68) gekoppelt ist, **dadurch gekennzeichnet, dass** der Spannmechanismus (7) eine drehbare Vorrichtung (32) aufweist, die entkoppelt werden kann, angeordnet zwischen dem Steuerorgan (34) und dem Schrauben-/Muttersystem (52, 68), wobei die Vorrichtung das Drehmoment begrenzt, das von dem Steuerorgan (34) zu dem Schrauben-/Muttersystem (52, 68) übertragen wird, und dadurch, dass die Drehmomentbegrenzungsvorrichtung (32) funktioniert, indem sie das Steuerorgan (34) von dem Schrauben-/Muttersystem (52, 68) entkoppelt, das seinerseits mit dem hinteren Element zum Verhaken (6) verbunden ist, wenn das Steuerorgan (34) in die Drehrichtung betätigt wird, die der Ausübung von Spannung auf das Blatt (2) entspricht, und ein Schwellenwert des Drehmoments erreicht ist.

2. Rahmen nach Anspruch 1, **dadurch gekennzeichnet, dass** die Drehmomentbegrenzungsvorrichtung (32) in das Steuerorgan (34) integriert ist, um eine Baugruppe zu bilden.

3. Rahmen nach irgendeinem der Ansprüche 1 bis 2, **dadurch gekennzeichnet, dass** die Drehmomentbegrenzungsvorrichtung (32) dergestalt funktioniert, dass das Steuerorgan (34) mit dem Schrauben-/Muttersystem (52, 68) gekoppelt bleibt, wenn das Steuerorgan (34) in die Drehrichtung betätigt wird, die dem Wegnehmen der Spannung von dem Blatt (2) entspricht.

4. Rahmen nach irgendeinem der Ansprüche 1 bis 3, **dadurch gekennzeichnet, dass** die Drehmomentbegrenzungsvorrichtung (32) zwei Zahnkränze (46, 50) mit komplementären Verzahnungen zum gegenseitigen axialen Eingriff und ein Belastungselement (43) aufweist, das funktioniert, damit die Zahnkränze miteinander eingreifen.

5. Rahmen nach Anspruch 4, **dadurch gekennzeichnet, dass** die Verzahnungen asymmetrisch sind, wobei jeder Zahn eine erste geneigte Seitenfläche (46a, 50a) und eine zweite gerade Seitenfläche (46b, 50b) umfasst, welche eine dritte im Wesentlichen gerade Querfläche (46c, 50c) begrenzen.

6. Rahmen nach irgendeinem der Ansprüche 1 bis 5, **dadurch gekennzeichnet, dass** das Steuerorgan (34) aus einer Kurbel aus gegossenem Kunststoff besteht, die eine Aufnahme (39) aufweist, die mindestens teilweise die Drehmomentbegrenzungsvorrichtung (32) aufnimmt, die ihrerseits mit einer Kappe (55) aus gegossenem Kunststoff verdeckt ist, die an die Kurbel angeschweißt ist.

7. Rahmen nach irgendeinem der Ansprüche 1 bis 6, **dadurch gekennzeichnet, dass** der Griff (4) eine untere Aussparung (31) umfasst, in welcher das Steuerorgan (34) durch Formschluss untergebracht ist.

8. Rahmen nach irgendeinem der Ansprüche 1 bis 7, **dadurch gekennzeichnet, dass** der Bügel (3) und der hintere Griff (4) aus einem einzigen integralen Block bestehen, insbesondere aus Aluminium-Druckguss.

9. Bügelsäge, **dadurch gekennzeichnet, dass** sie einen Sägerahmen (1) nach irgendeinem der Ansprüche 1 bis 8 umfasst, und mindestens ein Sägeblatt (2), das dazu eingerichtet ist, an dem vorderen (5) und hinteren (6) Element zum Verhaken verhakt zu werden.

## Claims

1. Bow saw frame, of the type comprising a bow (3) integral with a rear handle (4); a front attaching system (5) connected to the bow and designed for attaching in the distal end of a saw blade (2), with this front system being mounted at the front end of the frame; a rear attaching system (6) connected to the handle and designed for attaching the proximal end of the saw blade, the rear system being mounted to the rear end of the frame; a mechanism (7) for tensioning a saw blade when it is attached to the front (5) and rear (6) attaching devices, said mechanism (7) comprising a rotary control device (34) coupled with a screw-nut system (52, 68), **characterized in that** the tensioning mechanism (7) includes a disengageable rotary device (32), placed between the control device (34) and the screw-nut system (52, 68), said device limiting the torque transmitted by the control device (34) to the screw-nut system (52, 68) and **in that** the torque limiting device (32) works by uncoupling the control device (34) from the screw-nut system (52, 68), itself being attached to the rear attaching system (6) when the control device (34) is actuated in the direction of rotation corresponding to the tensioning of blade (2) and when a torque threshold value is reached.

2. Frame according to claim 1, **characterized in that** torque limiting device (32) is integrated into the control device (34) to form a subassembly.

3. Frame according to one of claims 1 to 2, **characterized in that** torque limiting device (32) works in such a way that control device (34) remains coupled to screw-nut system (52, 68) when control device (34) is actuated in the direction of rotation corresponding to the releasing of the tension on the blade (2).

4. Frame according to any one of claims 1 to 3, **characterized in that** torque limiting device (32) has two toothed crowns (46, 50) with complementary teeth mutually engaging axially, and a soliciting device (43) working to engage said toothed crowns mutually.

5. Frame according to claim 4, **characterized in that** the teeth are asymmetrical with each tooth comprising a first inclined face (46a, 50a) and a second straight lateral face (46b, 50b) bordering a third transversal face (46c, 50c) which is more or less straight.

6. Frame according to one of claims 1 to 5, **characterized in that** control device (34) is a molded plastic crank containing a housing (39) receiving at least partially a torque limiting device (32) itself covered by a molded plastic cap (55) welded to the crank.

7. Saw frame according to any one of claims 1 to 6, **characterized in that** handle (4) has a lower recess (31) in which, by matching shapes, control device (34) is housed.

8. Saw frame according to any one of claims 1 to 7, **characterized in that** bow (3) and rear handle (4) are formed of a single block, notably of moulded aluminium.

9. Bow saw, **characterized in that** it includes a saw mounting (1) according to any one of claims 1 to 8, and at least one saw blade (2) adapted in such a way as to be attached to said front (5) and rear (6) attaching systems.
